# EUROPÄISCHE PATENTANMELDUNG

(11) **EP 1 860 290 A1**
(43) Veröffentlichungstag der Anmeldung: **28.11.2007**
(21) Anmeldenummer: 07006943.0
(22) Anmeldetag: 03.04.2007
(51) Int. Cl.: F01M 11/04, B67C 11/02

(54) **Ölwechseleinrichtung, Ölsammelgehäuse und Verfahren zum Ölwechseln**

(30) Priorität: 24.05.2006 DE 102006024331
(71) Anmelder: Bayerische Motoren Werke Aktiengesellschaft, 80809 München (DE)
(72) Erfinder: Spiess, Thomas, 81825 München (DE); Dembinski, Norbert, 81739 München (DE)

(57) **Zusammenfassung**

Ölwechseleinrichtung für Maschinen mit Ölsammelgehäuse mit Ölwechselöffnung und einem dieser zugeordneten Verschluss, insbesondere für Brennkraftmaschinen in Kraftfahrzeugen, umfassend eine Öffnungseinrichtung zum Öffnen des der Ölwechselöffnung zugeordneten Verschlusses, eine Öltransfereinrichtung und eine Befestigungseinrichtung zur Befestigung der Ölwechseleinrichtung zumindest mittelbar am Ölsammelgehäuse im Bereich der Ölwechselöffnung sowie Ölsammelgehäuse und Verfahren zum Ölwechseln.

## Beschreibung

Die Erfindung betrifft eine Ölwechseleinrichtung für Maschinen mit Ölsammelgehäuse mit Ölwechselöffnung und einem dieser zugeordneten Verschluss, insbesondere für Brennkraftmaschinen in Kraftfahrzeugen, umfassend eine Öffnungseinrichtung zum Öffnen des der Ölwechselöffnung zugeordneten Verschlusses und eine Öltransfereinrichtung. Außerdem betrifft die Erfindung ein Ölsammelgehäuse sowie ein Verfahren zum Ölwechseln.

Viele Maschinen sind ölgeschmiert, ein regelmäßiger Wechsel des Schmieröls ist erforderlich. Hierzu umfassen solche Maschinen üblicherweise ein Ölsammelgehäuse mit Ölwechselöffnung, die mit einem Verschluss verschlossen ist. Beispielsweise ist die bei in Kraftfahrzeugen verwendeten Brennkraftmaschinen der Fall, die im unteren Bereich ihres Maschinengehäuses eine Ölwanne mit verschließbarer Öffnung aufweisen. Bei einem Ölwechsel wird die Ölablassschraube geöffnet und das abfließende Altöl in einer Aufnahmeschale aufgefangen. Alternativ wird eine Absaugsonde beispielsweise über ein Ölpeilstab-Führungsrohr in das Maschinengehäuse bis zur Ölwanne eingeführt und das Altöl abgesaugt.

Nachteilig ist bei dem bisher üblichen Ölwechsel, der häufig bei hoher Öltemperaturen durchgeführt wird, insbesondere, dass das ablaufende Öl beim Ablassen spritzt und es bei der Entsorgung des Öls in der Auffangschale leicht zum Verschütten kommen kann mit der Folge von Ölverschmutzungen und der damit verbunden Rutschgefahr. Außerdem handelt es sich dabei um einen offenen Prozess, so dass die ölwechselnde Person mit Öl in Kontakt kommen kann und einer Gesundheitsgefährdung ausgesetzt ist. Der schwerkraftbedingte Ölablauf ist ferner sehr Zeitintensiv. Nachteilig ist auch der hohe Handlingsaufwand zum Auffangen des ablaufenden Öls. Es muss eine vorgegebene Unterstellhöhe, häufig unter Zuhilfenahme von Werkstatt-Einrichtungen, wie Wagenheber, wobei die Maschine waagerecht anzuheben ist, erreicht werden, eine bestimmte Arbeitshöhe ist für die ölwechselnde Person vorteilhaft, allerdings darf die Fallhöhe zwischen Ölwechselöffnung und Auffangbehälter nicht zu groß sein. Das Absaugen von Öl mittels Absaugsonde birgt die Gefahr, dass Rückstände, insbesondere Schmutzpartikel, im Ölsammelgehäuse verbleiben, da einen Ausspülung mit Spülströmung durch die Ölwechselöffnung unterbleibt und die Absaugsonde einen nur geringen Durchmesser aufweist.

Eine Vorrichtung zum Ablassen von Öl aus Fahrzeugmotoren ist mit der DE 7311523 U bekannt geworden, die einen unter die Ablassstelle zu bringenden Trichter beschreibt, der mit einem nach der Seite hin wegführenden Ablaufrohr versehen und mit einem von außen zu bedienenden Werkzeug zum Lösen der Ölablassschraube ausgestattet ist. Diese bekannte Vorrichtung muss allerdings während des gesamten Ölablassvorganges von einer ölwechselnden Person am Boden der Ölwanne gehalten werden, so dass die Person auch bei Verwendung dieser Vorrichtung mit heißem Altöl in Kontakt kommen kann und einer Gesundheitsgefährdung ausgesetzt ist. Außerdem hängt die saubere Durchführung des Ölwechsels maßgeblich von der ölwechselnden Person ab.

Der Erfindung liegt daher die Aufgabe zugrunde, eine eingangs genannte Ölwechseleinrichtung sowie ein Ölsammelgehäuse und ein Verfahren zum Ölwechseln bereit zu stellen, so dass eine Ölwechsel in einem geschlossenen System ermöglicht wird, der auch bei heißem Öl ohne Gefährdung unmittelbar und schnell gegebenenfalls aktiv erfolgen kann, der eine reduzierten Handlingsaufwand erfordert und wobei die Prozesssicherheit wesentlich erhöht ist.

Die Lösung der Aufgabe erfolgt mit einer Ölwechseleinrichtung mit den Merkmalen des Anspruchs 1, einem Ölsammelgehäuse gemäß Anspruch 16 und einem Verfahren zum Ölwechseln nach Anspruch 24. Besonders bevorzugte Ausgestaltungen und Weiterbildungen der erfindungsgemäßen Ölwechseleinrichtung, des Ölsammelgehäuse und des Verfahrens sind Gegenstand der abhängigen Ansprüche.

Die erfindungsgemäße Ölwechseleinrichtung zeichnet sich durch eine Befestigungseinrichtung zur Befestigung der Ölwechseleinrichtung zumindest mittelbar am Ölsammelgehäuse im Bereich der Ölwechselöffnung. Wesentlich ist dabei, dass die Ölwechseleinrichtung so am Ölsammelgehäuse befestigbar ist, dass beim Öffnen des Verschlusses der Ölwechselöffnung abfließendes Öl in die Öltransfereinrichtung fließt. Dabei ist es nicht erforderlich, dass die Befestigung der Ölwechseleinrichtung unmittelbar am Ölsammelgehäuse erfolgt, sie kann vielmehr auch mittelbar unmittelbar am Ölsammelgehäuse befestigt sein, beispielsweise am Verschluss der Ölwechselöffnung. Der besondere Vorteil der erfindungsgemäßen Ölwechseleinrichtung liegt darin, dass sie am Ölsammelgehäuse befestigt werden kann, es also nicht erforderlich ist, sie nach Befestigung weiter dort fest zu halten. Obwohl die Ölwechseleinrichtung, nachdem sie am Ölsammelgehäuse befestigt worden ist, die Ölwechselöffnung und deren Verschluss überdeckt, kann dieser mittels der Öffnungseinrichtung geöffnet werden. Auf diese Weise wird ein Ölwechsel in einem geschlossenen System ermöglicht, der auch bei heißer Maschine ohne Gefährdung unmittelbar und schnell gegebenenfalls aktiv erfolgen kann, der Handlingsaufwand ist reduziert und die Prozesssicherheit wesentlich erhöht.

Vorzugsweise ist die Befestigungseinrichtung zur manuellen Befestigung der Ölwechseleinrichtung zumindest mittelbar am Ölsammelgehäuse im Bereich der Ölwechselöffnung geeignet. Dadurch ist es einer ölwechselnden Person möglich, die Ölwechseleinrichtung ohne Zuhilfenahme eines Werkzeugs am Ölsammelgehäuse zu befestigen. Eine Ölwechseleinrichtung, die mittels der Befestigungseinrichtung mit dem der Ölwechselöffnung zugeordneten Verschluss verbindbar ist, wird bevorzugt, da eine Aufnahme am Verschluss besonders günstig zu realisieren ist und zugleich ein Angriff am Verschluss zum Öffnen und Schließen desselben ermöglicht wird. Besonders zweckmäßig ist es, wenn die Befestigungseinrichtung zur lösbar axialfesten Verbindung mit dem Ölsammelgehäuse respektive dem Verschluss der Ölwechselöffnung an ihrem dem Verschluss zugeordneten Ende eine Verbindungseinrichtung aufweist. Dabei hat sich ein Gewindeverschluss, ein Bajonettverschluss, ein Rastverschluss oder ein Klipsverschluss als besonders günstig herausgestellt. Besondere Vorteile bietet eine am dem Verschluss der Ölwechselöffnung abgewandten Ende der Befestigungseinrichtung angeordnete Einrichtung zum manuellen Bedienung des Verschlusses, die außerhalb des vom abfließenden Öl beaufschlagten Bereiches angeordnet ist und daher leicht und ohne Kontakt zum Öl von einer ölablassenden Person bedient werden kann.

Gemäß einer besonders vorteilhaften Ausgestaltung der Erfindung ist die Öffnungseinrichtung mit dem der Ölwechselöffnung zugeordneten Verschluss lösbar drehfest verbindbar, wobei es sich als zweckmäßig erwiesen hat, wenn die Öffnungseinrichtung an ihrem dem Verschluss der Ölwechselöffnung zugeordneten Ende eine mit einer entsprechenden Kontur des Verschlusses korrespondierende Kontur aufweist. Diese Kontur kann am Verschluss der Ölwechselöffnung negativ und an der Öffnungseinrichtung positiv ausgeformt sein, gegebenenfalls auch umgekehrt. Als sehr günstig hat es sich erwiesen, wenn die Öffnungseinrichtung an ihrem dem Verschluss der Ölwechselöffnung abgewandten Ende eine Kontur zum Angriff eines Werkzeugs zum Öffnen des Verschlusses aufweist. So kann ölablassende Person außerhalb des vom abfließenden Öl beaufschlagten Bereiches ein Werkzeug zum Öffnen des Verschlusses ansetzen, die Öffnungseinrichtung erfüllt dabei gleichermaßen die Funktion eines Adapters.

Bei einer besonders bevorzugten Ausgestaltung der erfindungsgemäßen Ölwechseleinrichtung weist die Öltransfereinrichtung zur toleranzausgleichenden Dichtung gegenüber dem Ölsammelgehäuse eine Dichtung auf. Mittels der Dichtung schließt die Öltransfereinrichtung dicht mit dem Ölsammelgehäuse ab, so dass beim Ablassen von Öl kein an der Öltransfereinrichtung vorbei nach außen tritt. Die Dichtung dient auch als Toleranzausgleich. Wenn die Ölwechseleinrichtung mittels der Befestigungseinrichtung am Ölsammelgehäuse befestigt ist, ist die Befestigungseinrichtung spannbar, so dass die Ölwechseleinrichtung mit einer bestimmten Vorspannung mit dem Ölsammelgehäuse verspannbar ist, wobei die Dichtung zwischen Öltransfereinrichtung und Ölsammelgehäuse zusammenpressbar ist. Gegebenenfalls kann die Dichtkraft der Dichtung so groß bemessen sein, dass eine aktive Ölabsaugung ohne Ansaugen von Luft zwischen Ölwechseleinrichtung und Ölsammelgehäuse und/oder eine aktive Befüllung des Ölsammelgehäuse ohne Ölaustritt ermöglicht wird.

Eine besonders zweckmäßige Ölwechseleinrichtung zeichnet sich dadurch aus, dass die Öltransfereinrichtung die Befestigungseinrichtung und die Öffnungseinrichtung aufnimmt, die Öltransfereinrichtung durchsichtig oder durchscheinend ist oder zumindest einen durchsichtigen oder durchscheinenden Bereich aufweist und/oder die Öltransfereinrichtung an ihrem der Ölwechselöffnung abgewandten Ende zur Verbindung mit einem Schlauch geeignet ist, wobei eine Schnellkupplungsverbindung besonders von Vorteil ist. Eine durchsichtige oder durchscheinende Öltransfereinrichtung oder ein entsprechender Einsatz in einer Öltransfereinrichtung ermöglicht es einer ölwechselnden Person, den Ölwechsel optisch zu verfolgen und beispielsweise zu sehen, wenn das Öl vollständig aus dem Ölsammelgehäuse abgelaufen ist. Ein mit der Öltransfereinrichtung verbundener Schlauch ermöglicht eine Ableitung abfließenden Öls in einen Auffangbehälter oder den Anschluss einer aktiven Ölabsaug- oder Öleinfülleinrichtung. Eine Schnellkupplungsverbindung ermöglicht dabei einen schnellen und einfachen, auch einhändig durchführbaren Anschluss der Öltransfereinrichtung.

Sehr vorteilhaft ist es, wenn die Befestigungseinrichtung zur Öffnungseinrichtung und zur Öltransfereinrichtung in axialer Richtung begrenzt verschiebbar ist und die Befestigungseinrichtung und die Öffnungseinrichtung zueinander und zur Öltransfereinrichtung verdrehbar angeordnet sind. Dadurch ist es möglich, die Ölwechseleinrichtung mit ihrer Öltransfereinrichtung an das Ölsammelgehäuse anzusetzen, die Befestigungseinrichtung axial zur Verbindung mit dem Verschluss der Ölwechselöffnung zu verschieben und zu drehen, die Öffnungseinrichtung mit dem Verschluss zu verbinden und den Verschluss zu öffnen.

Das erfindungsgemäße Ölsammelgehäuse zur Verwendung mit der erfindungsgemäßen Ölwechseleinrichtung zeichnet sich dadurch aus, dass der der Ölwechselöffnung zugeordnete Verschluss zur lösbar axialfesten Verbindung mit der Befestigungseinrichtung der Ölwechseleinrichtung geeignet ist. Hierzu weist zweckmäßigerweise der Verschluss der Ölwechselöffnung ein mit dem Gewinde-, Bajonett-, Rast- oder Klipsverschluss der Befestigungseinrichtung der Ölwechseleinrichtung korrespondierendes Gegenstück auf. Außerdem ist der Verschluss der Ölwechselöffnung zur lösbar drehfesten Verbindung mit der Öffnungseinrichtung der Ölwechseleinrichtung geeignet ist, indem er eine mit einer entsprechenden Kontur der Öffnungseinrichtung korrespondierende Kontur aufweist.

Besonders vorteilhaft ist es, wenn das Ölsammelgehäuse einen nach innen gerichteten, die Ölwechselöffnung umschließenden Dom aufweist, in dem der Verschluss der Ölwechselöffnung angeordnet ist. Vorzugsweise weist der Dom ein Innengewinde auf, in das ein mit einem Außengewinde versehener Verschluss verliersicher eingeschraubt ist. Die Verliersicherung ist dabei so ausgeführt, dass zwar ein Öffnen und Schließen der Ölwechselöffnung möglich ist, der Verschluss jedoch nicht unbeabsichtigt aus dem Dom entfernt werden kann.

Nach einer bevorzugten Ausgestaltung des erfindungsgemäßen Ölsammelgehäuses weist der Dom im Verbindungsbereich zum Ölsammelgehäuse zum Boden des Ölsammelgehäuses hin zumindest annähernd bündige Durchlässe auf. Dadurch ist gewährleistet, dass im Ölsammelgehäuse befindliches Öl beim Ölwechsel vollständig ablaufen kann und weder Ölreste noch Verunreinigungen im Ölsammelgehäuse verbleiben.

Sehr zweckmäßig ist es, wenn der Dom als gesondertes Bauteil in einer Öffnung im Boden des Ölsammelgehäuses angeordnet ist. Diese Ausführung bietet besondere fertigungstechnische Vorteile, da an einer vorbestimmten Stelle, beispielsweise der geodätisch tiefsten Stelle, lediglich das Ölsammelgehäuse durchbrochen und in den Durchbruch der Dom mit Verschluss eingesetzt und dicht befestigt werden muss.

Das erfindungsgemäße Verfahren zum Ölwechseln bei einer Maschine mit dem erfindungsgemäßen Ölsammelgehäuse unter Verwendung der erfindungsgemäßen Ölwechseleinrichtung zeichnet sich dadurch aus, dass die Ölwechseleinrichtung mittels der Befestigungseinrichtung der Ölwechseleinrichtung manuell mit dem Verschluss der Ölwechselöffnung lösbar axialfest verbunden wird, dann die Öffnungseinrichtung der Ölwechseleinrichtung mit dem Verschluss der Ölwechselöffnung lösbar drehfest verbunden wird und schließlich mittels der Öffnungseinrichtung der Verschluss der Ölwechselöffnung geöffnet wird, so dass im Ölsammelgehäuse befindliches Öl durch die Öltransfereinrichtung ablaufen kann. Mit dem erfindungsgemäßen Verfahren kann ein Ölablass ohne Verschmutzungsrisiko für Personal und Werkstatt in besonders kurzer Zeit und unter Vermeidung eines größeren Handlingsaufwands erfolgen.

Gemäß einer bevorzugten Weiterbildung des erfindungsgemäßen Verfahrens wird nach dem Ablaufen des Öls der Verschluss der Ölwechselöffnung mittels der Öffnungseinrichtung der Ölwechseleinrichtung geschlossen und die Befestigungseinrichtung der Ölwechseleinrichtung gelöst, so dass die Ölwechseleinrichtung abgenommen werden kann. Eine ebenfalls bevorzugten Weiterbildung zufolge wird nach dem Ablaufen des Öls und vor dem Schließen des Verschlusses der Ölwechselöffnung durch die Öltransfereinrichtung aktiv frisches Öl in das Ölsammelgehäuse gefüllt. Alternativ oder zusätzlich können weitere Vorteile erreicht werden, indem das im Ölsammelgehäuse befindliche Öl aktiv abgesaugt wird. Eine noch weitere Verbesserung wird mit einer optischen und/oder akustischen Anzeige erreicht, die eine vollständige Entleerung und/oder eine vorbestimmte Füllung des Ölsammelgehäuses mit Öl signalisiert.

Von besonderem Vorteil ist es, wenn das erfindungsgemäße Verfahren automatisiert wird, indem die folgenden Schritte alle oder ausgewählt einzeln automatisiert durchgeführt werden: Die Ölwechseleinrichtung wird zum Ölsammelgehäuse geführt und die Öltransfereinrichtung unterhalb der Ölwechselöffnung positioniert, der Verschluss der Ölwechselöffnung wird geöffnet, so dass im Ölsammelgehäuse befindliches Öl durch die Öltransfereinrichtung ablaufen kann, eine vorbestimmte Menge frisches Öl wird durch die Öltransfereinrichtung aktiv in das Ölsammelgehäuse gefüllt, der Verschluss der Ölwechselöffnung wird geschlossen und die Ölwechseleinrichtung wird vom Ölsammelgehäuse entfernt.

Nachfolgend wir ein besonders zu bevorzugendes Ausführungsbeispiel der Erfindung unter Bezugnahme auf Figuren näher erläutert, dabei zeigen schematisch und beispielhaft
- Figur 1: eine Ölwechseleinrichtung mit Befestigungseinrichtung, Öffnungseinrichtung und Öltransfereinrichtung an einem gegossenen Ölsammelgehäuse,
- Figur 2: eine Ölwechseleinrichtung mit Befestigungseinrichtung, Öffnungseinrichtung und Öltransfereinrichtung an einem Ölsammelgehäuse aus Blech,
- Figur 3a: das Anbringen einer eine Ölwechseleinrichtung mit Befestigungseinrichtung, Öffnungseinrichtung und Öltransfereinrichtung an einem Ölsammelgehäuse,
- Figur 3b: das Öffnen eines einer Ölwechselöffnung eines Ölsammelgehäuses zugeordneten Verschlusses,
- Figur 3c: das Ablassen von Öl aus einem Ölsammelgehäuse,
- Figur 4a: den Werkstatteinsatz einer Ölwechseleinrichtung unter Verwendung einer Hebeeinrichtung und
- Figur 4b: den Werkstatteinsatz einer Ölwechseleinrichtung sowie ein mit der Ölwechseleinrichtung verbundene Ölservicestation.

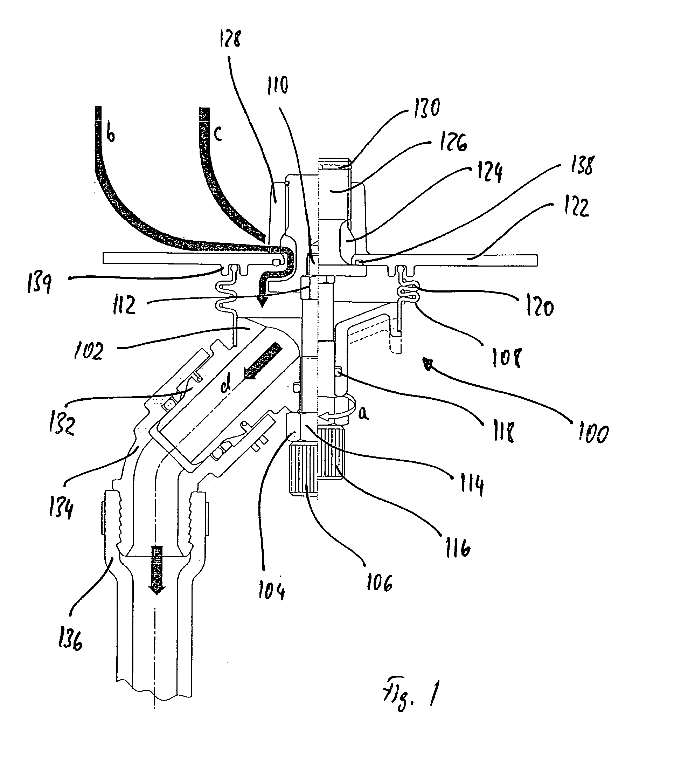

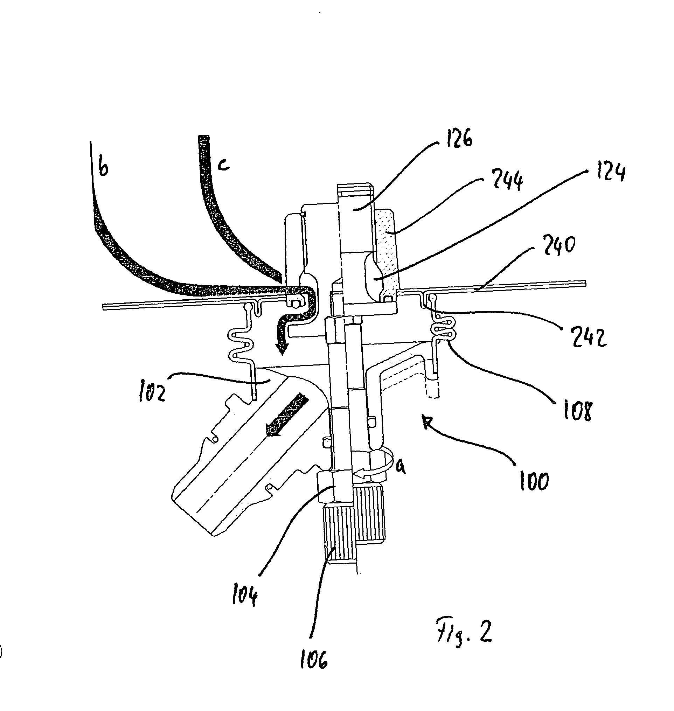

Figur 1 zeigt eine Ölwechseleinrichtung 100 mit Befestigungseinrichtung 106, Öffnungseinrichtung 104 und Öltransfereinrichtung 102 an einem gegossenen Ölsammelgehäuse 122. Eine Ölwechseleinrichtung 100 mit Befestigungseinrichtung 106, Öffnungseinrichtung 104 und Öltransfereinrichtung 102 an einem Ölsammelgehäuse 240 aus Blech ist in Figur 2 dargestellt. Gleiche Bauteile sind in den Figuren 1 und 2 mit denselben Bezugszeichen versehen. Es zeigen jeweils die rechte Zeichnungshälfte den Ölablassvorgang bei noch geschlossener Öffnungseinrichtung 104 und die linke Zeichnungshälfte den Ölablassvorgang bei bereits geöffneter Öffnungseinrichtung 104.

Die Ölwechseleinrichtung 100 umfasst eine trichterförmige Öltransfereinrichtung 102 zum Auffangen von abfließendem Öl. Die Öltransfereinrichtung 102 besteht aus einem öl- und wärmeresistenten Kunststoff und ist durchsichtig oder durchscheinend ausgeführt oder weist zumindest einen durchsichtigen oder durchscheinenden Bereich auf, so dass der Ölwechselvorgang beobachtet werden kann. Ein Stutzen am unteren Ende der Öltransfereinrichtung 102 dient zum Abführen des abfließenden Öls. Der Stutzen umfasst endseitig einen Teil 132 einer Schnellkupplung zum Anschuss eines mit dem korrespondierenden Teil 134 der Schnellkupplung versehenen Schlauchs 136. Mit dem Trichterförmigen oberen Bereich der Öltransfereinrichtung 102 ist eine Dichtung 108 zur Abdichtung gegenüber dem Ölsammelgehäuse 122, 240 beim Ölwechseln verbunden. Vorliegend ist diese Dichtung 108 schlauchabschnittförmig als Faltenbalg ausgebildet und umfasst eine Spiralfeder 120, unter deren Federkraft die Dichtung - wenn die Ölwechseleinrichtung 100 am Ölsammelgehäuse 122, 240 angesetzt ist - dicht am Ölsammelgehäuse 122, 240 anliegt und ein Toleranzausgleich möglich ist. Stattdessen kann auch die Verwendung einer gegebenenfalls profilierten Elastomerdichtung vorteilhaft sein.

Im Bereich der Achse der Öltransfereinrichtung 102 sind die Öffnungseinrichtung 104 und zu dieser innen liegend koaxial die Befestigungseinrichtung 106 angeordnet. Die Befestigungseinrichtung 106 ist zur Öffnungseinrichtung 104 und zur Öltransfereinrichtung 102 in axialer Richtung begrenzt verschiebbar und die Befestigungseinrichtung 106 und die Öffnungseinrichtung 104 sind sowohl zueinander als auch zur Öltransfereinrichtung 102 verdrehbar.

Die Öffnungseinrichtung 104 ist rohrförmig ausgebildet und weist an ihrem dem Verschluss 126 der Ölwechselöffnung 124 abgewandten Ende eine Kontur 114 zum Angriff eines Werkzeugs zum Öffnen des Verschlusses 124 auf. Vorliegend ist die Kontur 114 eine Sechskantkontur zur Aufnahme eines Schraubenschlüssels. Um einen Ölaustritt zu verhindern, ist zwischen Öltransfereinrichtung 102 und Öffnungseinrichtung 104 eine Dichtung 118 angeordnet, die in einer Innennut in der Öltransfereinrichtung 102 einsitzt. An ihrem dem Verschluss 126 der Ölwechselöffnung 124 zugeordneten Ende weist die Öffnungseinrichtung 104 eine mit einer entsprechenden Kontur des Verschlusses korrespondierende Kontur 122 auf. Vorliegend ist die Öffnungseinrichtung 104 mit einem Außensechskant versehen, mit dem sie mit einem entsprechenden Innensechskant im Verschluss 126 der Ölwechselöffnung 124 lösbar drehfest verbindbar ist. Die Öffnungseinrichtung 104 dient als Adapter und ermöglicht ein Öffnen oder Schließen des Verschlusses 126 bei aufgesetzter Ölwechseleinrichtung 100 von außen. Die Sechskantkontur 114 der Öffnungseinrichtung 104 weist vorliegend eine größere Schlüsselweite auf, als die Sechskantkontur 112, so dass der Verschluss 126 leicht geöffnet werden kann.

Die Befestigungseinrichtung 106 ist stiftförmig ausgebildet und weist an ihrem dem Verschluss 126 der Ölwechselöffnung 124 abgewandten Ende eine Kontur 116 zur manuellen Befestigung am Ölsammler 122, 240 respektive Verschluss 124 auf. Vorliegend ist die Kontur 116 eine Rändelstruktur. An ihrem dem Verschluss 126 der Ölwechselöffnung 124 zugeordneten Ende weist die Befestigungseinrichtung 106 eine mit einer entsprechenden Kontur des Verschlusses korrespondierende Kontur 110 auf. Vorliegend ist die Befestigungseinrichtung 106 mit einem Außengewinde versehen, mit dem sie in ein entsprechendes Innengewinde im Verschluss 126 der Ölwechselöffnung 124 zur lösbar axialfesten Verbindung einschraubbar ist.

Das Ölsammelgehäuse 122, 240 weist im Boden, vorzugsweise an der geodätisch tiefsten Stelle, eine Ölwechselöffnung 124 auf, die mit einem Verschluss 126 verschließbar ist. Im Inneren des Ölsammelgehäuse 122, 240 ist ein die Ölwechselöffnung 124 umgebender Dom 128, 244 vorgesehen, der im Verbindungsbereich zum Ölsammelgehäuse 122, 240 zum Boden des Ölsammelgehäuses 122, 240 zumindest annähernd bündige Durchlässe aufweist. In dem Dom 128, 244 ist der Verschluss 126 der Ölwechselöffnung 124 angeordnet. Vorliegend ist der Dom 128, 244 mit einem Innengewinde versehen, der Verschluss 126 weist ein Außengewinde auf und ist in den Dom 128, 244 eingeschraubt. Indem der Verschluss 126 im Dom 128, 244 verdreht wird, ist er entsprechend der Gewindesteigung axial verlagerbar. Im geschlossenen Zustand verschließt der Verschluss 126 die Ölwechselöffnung 124, wobei eine Dichtung 138 zwischen Verschluss 126 und Ölwechselöffnung 124 wirkt. In geöffnetem Zustand ist die Ölwechselöffnung 124 freigegeben durch eine im Verschluss 126 ausgebildete Ringnut. Auch in geöffnetem Zustand kann so der Verschluss 126 im Dom 128, 244 verliersicher verbleiben, wobei ein unbeabsichtigtes vollständiges Herausschrauben mittels eines Rings 130 am inneren Ende des Verschlusses 126 verhindert ist. Im Ausführungsbeispiel nach Figur 1 ist das Ölsammelgehäuse 122 gegossen, der Dom 128 ist als integraler Bestandteil des Ölsammelgehäuses 122 zusammen mit diesem gegossen. Außerdem ist am Boden des Ölsammelgehäuse 122 eine doppelte Ringrippe 139 zur positionsgenauen, dichten Anlage der Ölwechseleinrichtung 100 an das Ölsammelgehäuse 122 angegossen. Bei dem Ölsammelgehäuse 240 aus Blech gemäß Figur 2 ist der Dom 244 als gesondertes Bauteil in eine Öffnung im Boden des Ölsammelgehäuse 240 eingesetzt und dort dicht fixiert, beispielsweise eingeschweißt, eingelötet oder eingeklebt. Der eingesetzte Dom 240 bildet die Ölwechselöffnung 124, der Verschluss 126 dichtet gegen die Unterseite des eingesetzten Doms 240. Eine Ringrippe 242 ist durch einen entsprechend geformten Blechfalz gebildet.

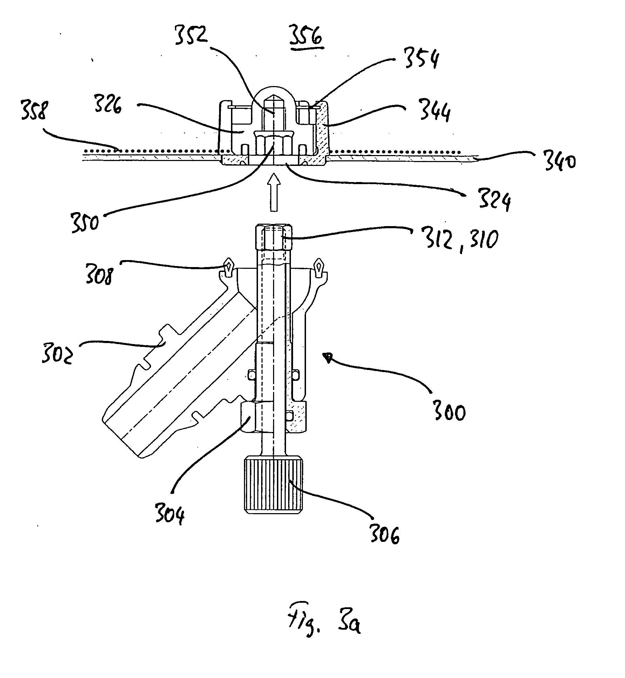

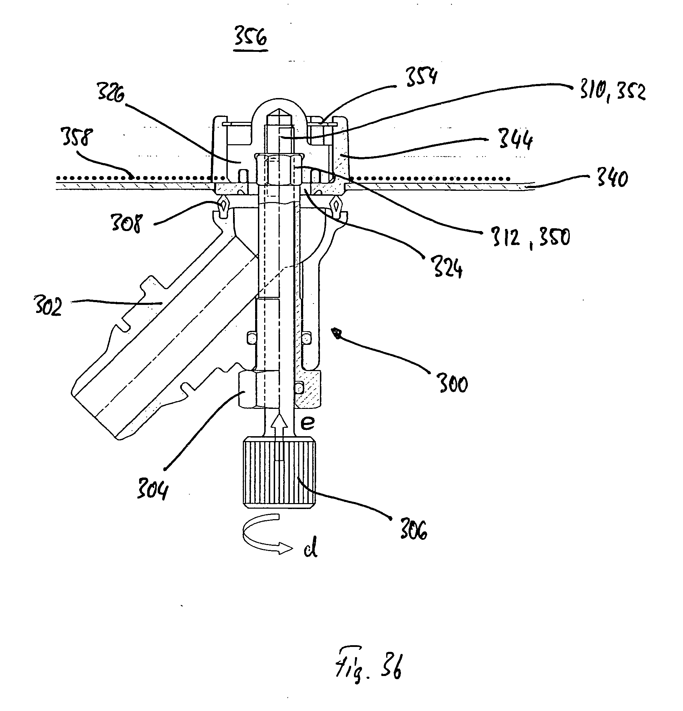

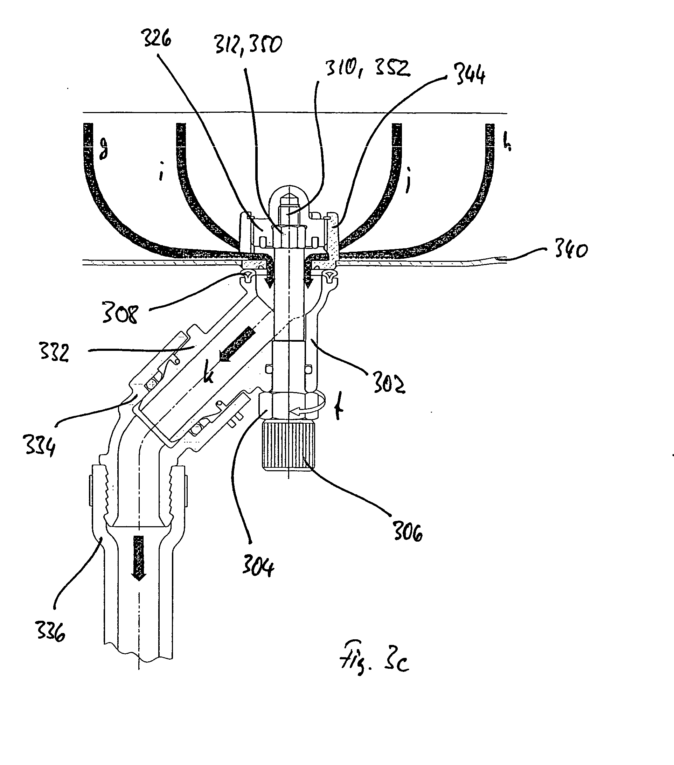

Anhand der Figuren 3a, 3b und 3c wird ein Ölwechsel beschrieben, dabei wird auch auf die Figuren 1, 2 Bezug genommen. Figur 3a zeigt das Anbringen einer Ölwechseleinrichtung 300 an einem Ölsammelgehäuse 340, das Öffnen eines einer Ölwechselöffnung 324 des Ölsammelgehäuses 340 zugeordneten Verschlusses 326 ist in Figur 3b dargestellt, Figur 3c zeigt das Ablassen von Öl aus dem Ölsammelgehäuse 340.

Ein Ölwechsel wird durchgeführt, indem die Ölwechseleinrichtung 100, 300 von unten an die Ölwechselöffnung 124, 324 des Ölsammelgehäuses 122, 240, 340 angesetzt wird, wobei gemäß Figuren 1, 2 die Dichtung 108 an der Ringrippe 139, 242 positioniert wird. Dem Ausführungsbeispiel nach Figur 3a, 3b, 3c zufolge ist die Dichtung 308 als profilierte, hohle Elastomerdichtung ausgeführt, eine Ringrippe ist nicht vorgesehen. Die Befestigungseinrichtung 106, 306 wird mit ihrem Gewinde 110, 310 manuell in das Gegengewinde 352 des geschlossenen Verschlusses 126, 326 eingeschraubt, in Figur 3b angedeutet durch die Pfeile d, e. Dabei kommt die Ölwechseleinrichtung 100, 300 zur dichten Anlage am Ölsammelgehäuse 122, 240 und die Dichtung 108, 308 entfaltet - gemäß Figuren 1, 2 unter der Kraft der Feder 120 - ihre volle Dichtwirkung. Außerdem wird auch die Öffnungseinrichtung 104, 304 mit dem Verschluss 126, 326 verbunden, indem, wie in den Figuren 3a, 3b, 3c gezeigt, die Kontur 312 der Öffnungseinrichtung 304 in die korrespondierende Kontur 350 im Verschluss 326 eingreift. In den Figuren 1, 2 ist in der rechten Zeichnungshälfte die noch unbefestigte Position gestrichelt angedeutet.

Sobald die Ölwechseleinrichtung 100, 300 mittels der Befestigungseinrichtung 106, 306 befestigt und die Öffnungseinrichtung 104, 304 mit dem Verschluss 126, 326 verbunden ist, wird mittels der Öffnungseinrichtung 104, 304 der Verschluss 126, 326 der Ölwechselöffnung 124, 324 geöffnet, indem ein Schraubenschlüssel an der Sechskantkontur 114 angesetzt und die Öffnungseinrichtung 104, 304 entsprechend der Pfeilrichtung a, f verdreht wird. Der Verschluss 126, 326 wird dabei soweit geöffnet, bis der Ring 130 am inneren Ende des Doms 128, 244 respektive der Verschluss 326 am Ring 354 zur Anlage kommt und damit eine Rückmeldung über die Vollständige Öffnung gegeben wird.

Bei geöffnetem Verschluss 126, 326 strömt im Ölsammelgehäuse 122, 240, 340 befindliches Öl 356 durch die Ölwechselöffnung 124, 324 aus. Dabei ist aufgrund der zum Boden des Ölsammelgehäuses 122, 240, 340 zumindest annähernd bündigen Durchlässe gewährleistet, dass Ölströme b, g, h Schmutzpartikel 358 am Grund des Ölsammelgehäuses 122, 240, 340 ausschwemmen. Außerdem kann Öl 358 entsprechend den Pfeilrichtungen c, i, j ausströmen, so dass ein hohes Ausströmvolumen erreicht wird. Das ausströmende Öl d, k wird in mittels der Öltransfereinrichtung 102, 302 aufgefangen abgeleitet.

Während bei den Ausführungsformen nach den Figuren 1, 2 der Verschluss 126 zum Öffnen nach außen aufgeschraubt wird, wird der Verschluss 326 bei der Ausführungsform nach Figur 3a, 3b, 3c zum Öffnen nach innen geschraubt. Die Ausführungsform gemäß Figur 3a, 3b, 3c zeigt ein Ölsammelgehäuse 340 aus Blech mit eingesetztem Dom 344. 332 bezeichnet einen der Öltransfereinrichtung 302 zugeordneten Teil einer Schnellkupplung, deren anderer Teil mit 334 bezeichnet ist. Mit 336 ist ein Schlauch bezeichnet.

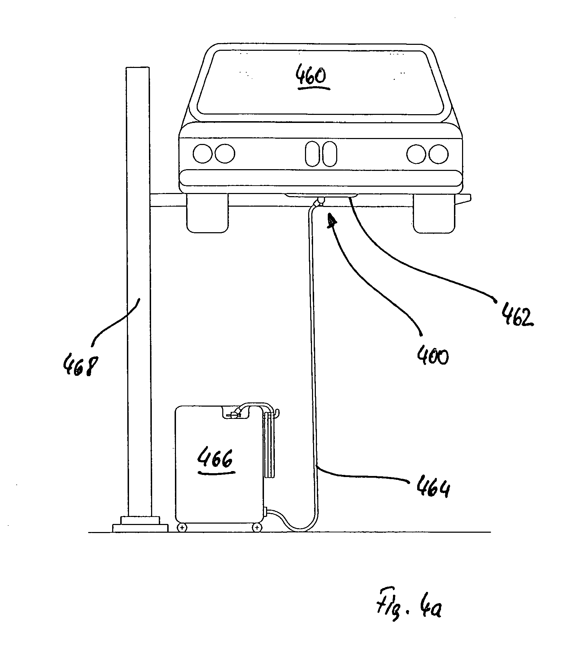

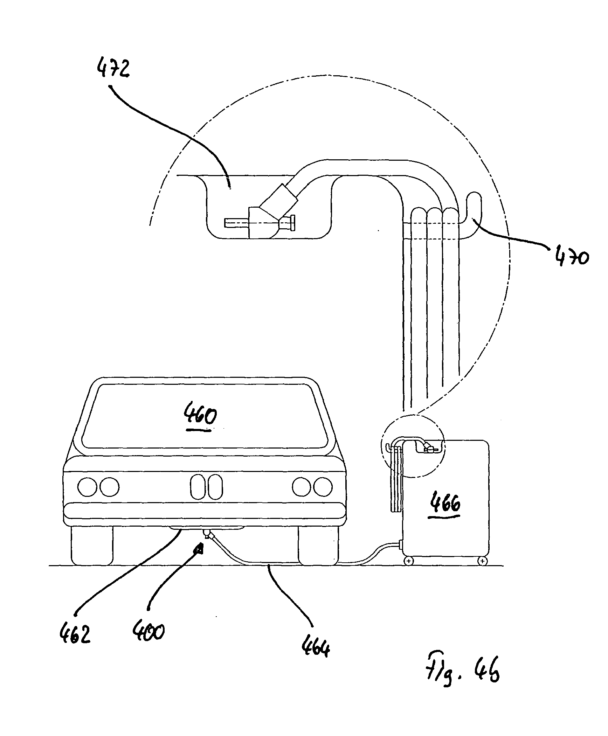

Der Werkstatteinsatz einer Ölwechseleinrichtung 400 mit einer Ölservicestation 466 ist mit den Figuren 4a, 4b. Gemäß Figur 4a erfolgt ein Ölwechsel bei mittels einer Hebeeinrichtung 468 angehobenem Fahrzeug 460, während nach Figur 4b ein Anheben des Fahrzeugs 460 nicht erforderlich ist. In beiden Darstellungen ist die Ölwechseleinrichtung 400 mit dem Ölsammelgehäuse 462 verbunden. Die Ölservicestation 466 weist eine Aufnahme 470 für einen Schlauch 464 und eine weitere Aufnahme 472 zur Ablage der Ölwechseleinrichtung 400 auf, wenn diese nicht benutzt wird. Vorliegend ist die Aufnahme 470 hakenförmig und die Aufnahme 472 muldenförmig im Gehäuse der Ölservicestation 466 ausgebildet. Die Aufnahme 472 ermöglicht eine tropffreie Ablage der Ölwechseleinrichtung 400 und kann gegebenenfalls mit einem eigenen Ablauf versehen sein, do dass eine Ansammlung von Öl in der Aufnahme 472 vermieden wird.

Mit der erfindungsgemäßen Ölwechseleinrichtung 100, 300, 400 kann Öl sowohl passiv abgelassen werden, indem das Öl schwerkraftbedingt abläuft als auch aktiv abgesaugt werden. Außerdem kann mit der erfindungsgemäßen Ölwechseleinrichtung 100, 300, 400 eine Befüllung des Ölsammelgehäuses 122, 240, 340, 462 mit Öl erfolgen. Die erforderliche Ölmenge kann dabei einfach und schnell genau bemessen werden, da gegenüber einer herkömmlichen Befüllung von oben nicht abgewartet werden muss, bis sich das frisch eingefüllt Öl im Ölsammelgehäuse 122, 240, 340, 462 gesammelt hat. Die erfindungsgemäße Ölwechseleinrichtung 100, 300, 400 eignet sich darüber hinaus überaus gut zur teilweisen oder vollständigen Automatisierung der Ölwechselvorganges, eine Bemessung der einzufüllenden Ölmenge kann dabei bereits durch die Ölservicestation 466 vorgenommen werden. Einer etwaige Überfüllung kann verlustfrei korrigiert werden.

## Patentansprüche

1. Ölwechseleinrichtung (100, 300, 400) für Maschinen mit Ölsammelgehäuse (122, 240, 340, 464) mit Ölwechselöffnung (124, 324) und einem dieser zugeordneten Verschluss (126, 326), insbesondere für Brennkraftmaschinen in Kraftfahrzeugen, umfassend eine Öffnungseinrichtung (104, 304) zum Öffnen des der Ölwechselöffnung (124, 324) zugeordneten Verschlusses (126, 326) und eine Öltransfereinrichtung (102, 302), **gekennzeichnet durch** eine Befestigungseinrichtung (106, 306) zur Befestigung der Ölwechseleinrichtung (100, 300, 400) zumindest mittelbar am Ölsammelgehäuse (122, 240, 340, 464) im Bereich der Ölwechselöffnung (124,324).

2. Ölwechseleinrichtung (100, 300, 400) nach Anspruch 1, **dadurch gekennzeichnet, dass** die Befestigungseinrichtung (106, 306) zur manuellen Befestigung der Ölwechseleinrichtung (100, 300, 400) zumindest mittelbar am Ölsammelgehäuse (122, 240, 340, 464) im Bereich der Ölwechselöffnung (124, 324) geeignet ist.

3. Ölwechseleinrichtung (100, 300, 400) nach einem der Ansprüche 1-2, **dadurch gekennzeichnet, dass** die Ölwechseleinrichtung (100, 300, 400) mittels der Befestigungseinrichtung (106, 306) mit dem der Ölwechselöffnung (124, 324) zugeordneten Verschluss (126, 326) verbindbar ist.

4. Ölwechseleinrichtung (100, 300, 400) nach einem der Ansprüche 1-3, **dadurch gekennzeichnet, dass** die Befestigungseinrichtung (106, 306) an ihrem dem Verschluss (126, 326) der Ölwechselöffnung (124, 324) zugeordneten Ende eine Verbindungseinrichtung (110, 310) zur lösbar axialfesten Verbindung aufweist.

5. Ölwechseleinrichtung (100, 300, 400) nach einem der Ansprüche 1-4, **dadurch gekennzeichnet, dass** die Befestigungseinrichtung (106, 306) an ihrem dem Verschluss (126, 326) der Ölwechselöffnung (124, 324) zugeordneten Ende einen Gewindeverschluss (110, 310), einen Bajonettverschluss, einen Rastverschluss oder einen Klipsverschluss aufweist.

6. Ölwechseleinrichtung (100, 300, 400) nach einem der Ansprüche 1-5, **dadurch gekennzeichnet, dass** die Befestigungseinrichtung (106, 306) an ihrem dem Verschluss (126, 326) der Ölwechselöffnung (124, 324) abgewandten Ende eine Einrichtung zum manuellen Bedienung des Verschlusses (126, 326) aufweist.

7. Ölwechseleinrichtung (100, 300, 400) nach einem der Ansprüche 1-6, **dadurch gekennzeichnet, dass** die Öffnungseinrichtung (104, 304) mit dem der Ölwechselöffnung (124, 324) zugeordneten Verschluss (126, 326) lösbar drehfest verbindbar ist.

8. Ölwechseleinrichtung (100, 300, 400) nach einem der Ansprüche 1-7, **dadurch gekennzeichnet, dass** die Öffnungseinrichtung (104, 304) an ihrem dem Verschluss (126, 326) der Ölwechselöffnung (124, 324) zugeordneten Ende eine mit einer entsprechenden Kontur des Verschlusses (126, 326) korrespondierende Kontur aufweist.

9. Ölwechseleinrichtung (100, 300, 400) nach einem der Ansprüche 1-8, **dadurch gekennzeichnet, dass** die Öffnungseinrichtung (104, 304) an ihrem dem Verschluss (126, 326) der Ölwechselöffnung (124, 324) abgewandten Ende eine Kontur (114) zum Angriff eines Werkzeugs zum Öffnen des Verschlusses (126, 326) aufweist.

10. Ölwechseleinrichtung (100, 300, 400) nach einem der Ansprüche 1-9, **dadurch gekennzeichnet, dass** die Öltransfereinrichtung (102, 302) zur toleranzausgleichenden Dichtung gegenüber dem Ölsammelgehäuse (122, 240, 340, 464) eine Dichtung (108, 308) aufweist.

11. Ölwechseleinrichtung (100, 300, 400) nach einem der Ansprüche 1-10, **dadurch gekennzeichnet, dass** die Öltransfereinrichtung (102, 302) die Befestigungseinrichtung (106, 306) und die Öffnungseinrichtung (104, 304) aufnimmt.

12. Ölwechseleinrichtung (100, 300, 400) nach einem der Ansprüche 1-11, **dadurch gekennzeichnet, dass** die Öltransfereinrichtung (102, 302) durchsichtig oder durchscheinend ist oder zumindest einen durchsichtigen oder durchscheinenden Bereich aufweist.

13. Ölwechseleinrichtung (100, 300, 400) nach einem der Ansprüche 1-12, **dadurch gekennzeichnet, dass** die Öltransfereinrichtung (102, 302) an ihrem der Ölwechselöffnung (124, 324) abgewandten Ende zur Verbindung mit einem Schlauch (136, 336, 464) geeignet ist.

14. Ölwechseleinrichtung (100, 300, 400) nach einem der Ansprüche 1-13, **dadurch gekennzeichnet, dass** die Öltransfereinrichtung (102, 302) an ihrem der Ölwechselöffnung (124, 324) abgewandten Ende eine Schnellkupplungsverbindung (132, 332) aufweist.

15. Ölwechseleinrichtung (100, 300, 400) nach einem der Ansprüche 1-14, **dadurch gekennzeichnet, dass** die Befestigungseinrichtung (106, 306) zur Öffnungseinrichtung (104, 304) und zur Öltransfereinrichtung (102, 302) in axialer Richtung begrenzt verschiebbar ist und die Befestigungseinrichtung (106, 306) und die Öffnungseinrichtung (104, 304) zueinander und zur Öltransfereinrichtung (102, 302) verdrehbar angeordnet sind.

16. Ölsammelgehäuse (122, 240, 340, 464) zur Verwendung mit einer Ölwechseleinrichtung (100, 300, 400) nach einem der Ansprüche 1-15, **dadurch gekennzeichnet, dass** der der Ölwechselöffnung (124, 324) zugeordnete Verschluss (126, 326) zur lösbar axialfesten Verbindung mit der Befestigungseinrichtung (106, 306) der Ölwechseleinrichtung (100, 300, 400) geeignet ist.

17. Ölsammelgehäuse (122, 240, 340, 464) nach Anspruch 16, **dadurch gekennzeichnet, dass** der Verschluss (126, 326) der Ölwechselöffnung (124, 324) ein mit dem Gewinde-, Bajonett-, Rast- oder Klipsverschluss der Befestigungseinrichtung (106, 306) der Ölwechseleinrichtung (100, 300, 400) korrespondierendes Gegenstück (352) aufweist.

18. Ölsammelgehäuse (122, 240, 340, 464) nach einem der Ansprüche 16-17, **dadurch gekennzeichnet, dass** der Verschluss (126, 326) der Ölwechselöffnung (124, 324) zur lösbar drehfesten Verbindung mit der Öffnungseinrichtung (104, 304) der Ölwechseleinrichtung (100, 300, 400) geeignet ist.

19. Ölsammelgehäuse (122, 240, 340, 464) nach einem der Ansprüche 16-18, **dadurch gekennzeichnet, dass** der Verschluss (126, 326) der Ölwechselöffnung (124, 324) eine mit einer entsprechenden Kontur (112, 312) der Öffnungseinrichtung (104, 304) korrespondierende Kontur (350) aufweist.

20. Ölsammelgehäuse (122, 240, 340, 464) nach einem der Ansprüche 16-19, **dadurch gekennzeichnet, dass** das Ölsammelgehäuse (122, 240, 340, 464) einen nach innen gerichteten, die Ölwechselöffnung (124, 324) umschließenden Dom (128, 344) aufweist, in dem der Verschluss (126, 326) der Ölwechselöffnung (124, 324) angeordnet ist.

21. Ölsammelgehäuse (122, 240, 340, 464) nach einem der Ansprüche 16-20, **dadurch gekennzeichnet, dass** der Dom (128, 344) ein Innengewinde aufweist, in das ein mit einem Außengewinde versehener Verschluss (126, 326) verliersicher eingeschraubt ist.

22. Ölsammelgehäuse (122, 240, 340, 464) nach einem der Ansprüche 16-21, **dadurch gekennzeichnet, dass** der Dom (128, 344) im Verbindungsbereich zum Ölsammelgehäuse (122, 240, 340, 464) zum Boden des Ölsammelgehäuses (122, 240, 340, 464) zumindest annähernd bündige Durchlässe aufweist.

23. Ölsammelgehäuse (240, 340) nach einem der Ansprüche 16-22, **dadurch gekennzeichnet, dass** der Dom (128, 344) als gesondertes Bauteil in einer Öffnung im Boden des Ölsammelgehäuses (240, 340) angeordnet ist.

24. Verfahren zum Ölwechseln bei einer Maschine mit einem Ölsammelgehäuse (122, 240, 340, 464) nach einem der Ansprüche 16-23 unter Verwendung einer Ölwechseleinrichtung (100, 300, 400) nach einem der Ansprüche 1-15, **dadurch gekennzeichnet, dass**
- die Ölwechseleinrichtung (100, 300, 400) mittels der Befestigungseinrichtung (106, 306) der Ölwechseleinrichtung (100, 300, 400) manuell mit dem Verschluss (126, 326) der Ölwechselöffnung (124, 324) lösbar axialfest verbunden wird,
- die Öffnungseinrichtung (104, 304) der Ölwechseleinrichtung (100, 300, 400) mit dem Verschluss (126, 326) der Ölwechselöffnung (124, 324) lösbar drehfest verbunden wird und
- mittels der Öffnungseinrichtung (104, 304) der Verschluss (126, 326) der Ölwechselöffnung (124, 324) geöffnet wird, so dass im Ölsammelgehäuse (122, 240, 340, 464) befindliches Öl (356) durch die Öltransfereinrichtung (102, 302) ablaufen kann.

25. Verfahren nach Anspruch 24, **dadurch gekennzeichnet, dass** nach dem Ablaufen des Öls
- der Verschluss (126, 326) der Ölwechselöffnung (124, 324) mittels der Öffnungseinrichtung (104, 304) der Ölwechseleinrichtung (100, 300, 400) geschlossen und
- die Befestigungseinrichtung (106, 306) der Ölwechseleinrichtung gelöst wird, so dass die Ölwechseleinrichtung (100, 300, 400) abgenommen werden kann.

26. Verfahren nach einem der Ansprüche 24-25, **dadurch gekennzeichnet, dass** nach dem Ablaufen des Öls und vor dem Schließen des Verschlusses (126, 326) der Ölwechselöffnung (124, 324) durch die Öltransfereinrichtung (102, 302) aktiv frisches Öl in das Ölsammelgehäuse (122, 240, 340, 464) gefüllt wird.

27. Verfahren nach einem der Ansprüche 24-26, **dadurch gekennzeichnet, dass** das im Ölsammelgehäuse (122, 240, 340, 464) befindliche Öl (356) aktiv abgesaugt wird.

28. Verfahren nach einem der Ansprüche 24-27, **dadurch gekennzeichnet, dass** eine vollständige Entleerung und/oder eine vorbestimmte Füllung des Ölsammelgehäuses (122, 240, 340, 464) mit Öl optisch und/oder akustisch angezeigt wird.

29. Verfahren nach einem der Ansprüche 24-28, **gekennzeichnet durch** folgende automatisierte Schritte
- die Ölwechseleinrichtung (100, 300, 400) wird zum Ölsammelgehäuse (122, 240, 340, 464) geführt und die Öltransfereinrichtung (102, 302) unterhalb der Ölwechselöffnung (124, 324) positioniert,
- der Verschluss (126, 326) der Ölwechselöffnung (124, 324) wird geöffnet, so dass im Ölsammelgehäuse (122, 240, 340, 464) befindliches Öl (356) **durch** die Öltransfereinrichtung (102, 302) ablaufen kann,
- eine vorbestimmte Menge frisches Öl wird **durch** die Öltransfereinrichtung (102, 302) aktiv in das Ölsammelgehäuse (122, 240, 340, 464) gefüllt,
- der Verschluss (126, 326) der Ölwechselöffnung (124, 324) wird geschlossen und
- die Ölwechseleinrichtung (100, 300, 400) wird vom Ölsammelgehäuse (122, 240, 340, 464) entfernt.
